(19)

**Europäisches Patentamt**
**European Patent Office**
**Office européen des brevets**

(11) **EP 3 899 493 B1**

(12) **EUROPEAN PATENT SPECIFICATION**

(45) Date of publication and mention
of the grant of the patent:
**21.02.2024 Bulletin 2024/08**

(21) Application number: **19804867.0**

(22) Date of filing: **07.11.2019**

(51) International Patent Classification (IPC):
**G01N 21/03** $^{(2006.01)}$      **G01N 21/35** $^{(2014.01)}$

(52) Cooperative Patent Classification (CPC):
**G01N 21/35; G01N 21/031**

(86) International application number:
**PCT/IB2019/059582**

(87) International publication number:
**WO 2020/128666 (25.06.2020 Gazette 2020/26)**

(54) **LASER-BASED SYSTEM FOR THE DETECTION OF BENZENE IN AMBIENT AIR**

LASERBASIERTES SYSTEM ZUR DETEKTION VON BENZOL IN UMGEBUNGSLUFT

SYSTÈME DE DÉTECTION DU BENZÈNE DANS L'AIR AMBIANT BASÉ SUR LE LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 US 201862781128 P**
**10.05.2019 US 201962846003 P**

(43) Date of publication of application:
**27.10.2021 Bulletin 2021/43**

(73) Proprietors:
• **King Abdullah University of Science and Technology**
**Thuwal 23955 (SA)**
• **Saudi Arabian Oil Company**
**Dhahran 31311 (SA)**

(72) Inventors:
• **MHANNA, Mhanna**
**Thuwal, 23955-6900 (SA)**
• **ZHANG, Guangle**
**Thuwal, 23955-6900 (SA)**

• **FAROOQ, Aamir**
**Thuwal, 23955-6900 (SA)**
• **KUNNUMMAL, Noushad**
**Dhahran, 31311 (SA)**
• **KHAMIS, Abdullah Jassim**
**Dhahran, 31311 (SA)**

(74) Representative: **Ipsilon**
**Le Centralis**
**63, avenue du Général Leclerc**
**92340 Bourg-la-Reine (FR)**

(56) References cited:
**JP-A- H09 269 292     US-A1- 2007 273 882**

• **LEWICKI RAFAL ET AL: "Spectroscopic benzene detection using a broadband monolithic DFB-QCL array", PROCEEDINGS OF SPIE; [PROCEEDINGS OF SPIE ISSN 0277-786X VOLUME 10524], SPIE, US, vol. 9767, 7 March 2016 (2016-03-07), pages 97671T-97671T, XP060066273, DOI: 10.1117/12.2213696 ISBN: 978-1-5106-1533-5 cited in the application**

Description

## CROSS-REFERENCE TO RELATED APPLICATIONS

This application claims priority to U.S. Provisional Patent Application No. 62/781,128, filed on December 18, 2018, entitled "CAVITY-ENHANCED BENZENE SENSOR FOR ENVIRONMENTAL MONITORING," and U.S. Provisional Patent Application No. 62/846,003, filed on May 10, 2019, entitled "LASER-BASED SYSTEM FOR BENZENE DETECTION," the disclosures of which are incorporated herein by reference in their entirety.

## BACKGROUND

## TECHNICAL FIELD

Embodiments of the subject matter disclosed herein generally relate to a sensor for detecting benzene and/or other substances, and more specifically, to a laser-based system that uses cavity-enhanced absorption spectroscopy for determining trace amounts of benzene and/or other substances in ambient air.

## DISCUSSION OF THE BACKGROUND

Benzene ($C_6H_6$), also known as benzol, is a colorless liquid with a sweet odor. Benzene evaporates into air very quickly and dissolves slightly in water. Benzene is highly flammable. Most people can begin to smell benzene in air at approximately 60 parts of benzene per million parts of air (ppm) and recognize it as benzene at 100 ppm. Most people can begin to taste benzene in water at 0.5- 4.5 ppm. One part per million is approximately equal to one drop in 40 gallons. Benzene is found in air, water, and soil. Benzene comes from both industrial and natural sources.

Benzene is found in air from various emission sources, such as gasoline service stations, vehicle exhaust, refineries, and petrochemical processing facilities. Benzene is largely used in the petrochemical processing facilities or other facilities for making other chemicals, like styrene, ingredients for resins, and ingredients for nylon and synthetic fibers. Measured levels of benzene in outdoor air have ranged from 0.02 to 34 parts of benzene per billion parts of air (ppb). The World Health Organization (WHO) categorizes benzene as a major public health concern. Fatal diseases such as cancer and aplastic anemia have been linked to human exposure to benzene.

To prevent or be aware of benzene contamination, various benzene sensors are used at the benzene processing facilities for determining any escape of this chemical into the environment. For this reason, there is a large demand for new and improved benzene sensors as the existing commercial sensors lack in many respects. It is desired to have reliable, accurate, sensitive, and real-time diagnostic methods and sensors for benzene detection at various facilities where benzene emissions are likely.

U.S. Patent Application Publication No. 2007/0273882 discloses measuring trace components of complex gases, and in particular measuring hydrogen sulfide concentration in natural gas containing methane and ethylene. This publication discloses that a species of interest has overlapping absorption features with multiple compounds, which makes it difficult to identify a species of interest.

JP H09 269292 discloses an analyzer that can detect a number of organic substances, including benzene. The analyzer uses an absorption spectrum from 400 to 4,000 cm$^{-1}$.

However, the existing sensors are slow, not very accurate, and not very sensitive to small amounts of benzene. Thus, there is a need for a new sensor that can overcome these limitations.

## SUMMARY

According to an embodiment, there is a laser-based detection system that includes a laser device configured to emit a laser beam that includes a wavelength in a range of 2.5 to 4.0 $\mu$m or in a range of 3.0 to 4.5 $\mu$m, a measuring chamber configured to receive at an internal cavity ambient air and the laser beam, where the measuring chamber is configured to bounce the laser beam inside the internal cavity multiple times; a photosensor configured to receive an output laser beam from the measuring chamber and to measure an absorption of the 3.3 $\mu$m wavelength by the ambient air in the internal cavity; and a data acquisition system configured to receive a measurement from the photosensor and to detect an amount of benzene in the ambient air based on the 3.3 $\mu$m wavelength.

According to yet another embodiment, there is a method for determining a presence of benzene in ambient air, the method including introducing ambient air into a measurement chamber that has an internal cavity; emitting with a laser source a laser beam having a wavelength in a range of 2.5 to 4.0 $\mu$m or in a range of 3.0 to 4.5 $\mu$m; directing the laser beam into the internal cavity and bouncing the laser beam multiple times between mirrors located in the internal cavity; measuring with a photosensor an absorption of the 3.3 $\mu$m wavelength by the ambient air; and estimating with a data acquisition system an amount of benzene in the ambient air based on the absorption of the 3.3 $\mu$m wavelength.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic illustration of a novel laser-based detection system;
Figure 2 illustrates the absorbance of the benzene and methane at about a 3.3 $\mu$m wavelength;
Figure 3 is another schematic illustration of the novel laser-based detection system;
Figure 4 illustrates a laser-based detection system that uses a measurement cavity and an alignment laser device;
Figure 5 illustrates a dehumidifier that is used with the laser-based detection system and associated air path;
Figure 6 illustrates the effect of the dehumidifier on the ambient air that is introduced into the measurement cavity of the laser-based detection system;
Figure 7 illustrates another laser-based detection system;
Figure 8 illustrates the absorbance of the cavity enhanced novel laser-based detection system relative to a single pass benzene sensor;
Figure 9 illustrates the calibration of the novel laser-based detection system;
Figure 10 illustrates a self-contained laser-based detection system; and
Figure 11 is a flowchart of a method for detecting benzene in ambient air with the laser-based detection system.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. For simplicity, the following embodiments are discussed with regard to a laser-based detection system that uses an additional laser for alignment of the various optical components and also a dehumidifier for reducing the humidity in a cavity where the measurements take place. However, the embodiments discussed herein are not limited to such a configuration, but they may be applied to a system that has no additional laser and no dehumidifier.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

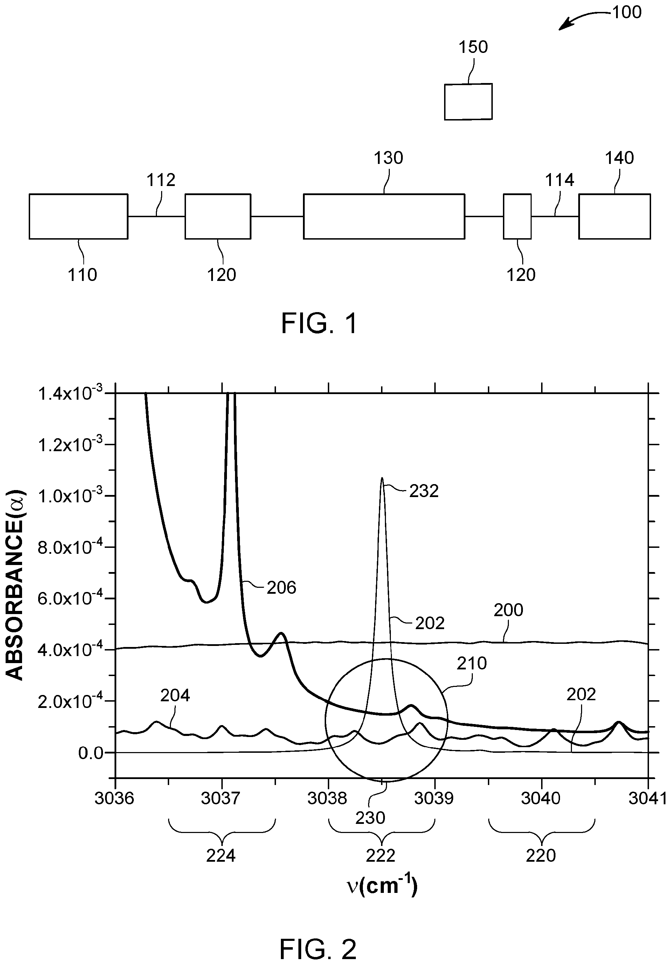

According to an embodiment, a laser-based detection system 100 is shown in Figure 1 and includes a laser device 110, optical elements 120, a measurement chamber 130, a photosensor 140, and a data acquisition system 150. The laser device 110 emits a light beam 112, which is directed by the optical elements 120 to the measurement chamber 130. The light beam 112 is reflected inside a cavity (not shown) of the measurement chamber 130, multiple times, and an output light 114 that escapes from the measurement chamber 130 is detected by the photosensor 140. The light intensity measured by the photosensor 140 is transmitted to the data acquisition system 150, where cavity-enhanced absorption spectroscopy (CEAS) analysis is performed. Based on this analysis, the presence of the benzene and/or the amount of benzene in the ambient air of the system 100 is determined.

Although benzene has absorption bands in the ultraviolet (UV) wavelength region, the broad features of most hydrocarbons in this region do not permit interference-free selective measurements. In other words, the benzene and many other hydrocarbons have similar signatures in the UV region and thus, the presence of one hydrocarbon cannot be distinguished from the presence of another hydrocarbon. For this reason, in this embodiment, the laser device 110 is specifically selected to generate an infrared light beam as the infrared (IR) absorption spectrum provides better opportunities for the highly selective detection of benzene and other pollutants.

Based on the IR spectrum of benzene, the best wavelength for detecting the benzene presence is near 674 cm$^{-1}$ (i.e., a wavelength of 14.837 $\mu$m). However, the inventors have observed that this wavelength region is currently not accessible by commercially available semiconductor lasers. In a previous work [1], low amounts of benzene were measured near the 9.6 $\mu$m wavelength using a quantum-cascade laser array. The selected wavenumber 1038 cm$^{-1}$ (note that the wavenumber is defined as being the reciprocal of the wavelength of the laser beam, and thus, the wavelength for this case is 1/1038 = 9.6 $\mu$m; however, in this application, the terms wavenumber and the wavelength are sometimes used interchangeably) has a strong spectral interference from ozone, which can be a challenge in many geographical locations.

Therefore, for the embodiment illustrated in Figure 1, the CEAS analysis has been configured to take advantage

of the ν20 vibrational band of benzene, which is near 3.3 μm, and which has negligible ozone interference. In one application, a range of 2.5 to 4.0 μm is used for the CEAS analysis. In another application, a range of 3.0 to 4.5 μm is selected.

A process for selecting an appropriate IR range for the wavelength of the laser device 110 is now discussed. Figure 2 shows the absorbance 200 for benzene, the absorbance 202 for methane, the absorbance 204 for ethylene, and the absorbance 206 for water as a function of the wavenumber, all of them around a wavenumber of 3040 cm$^{-1}$, which corresponds to a wavelength of about 3.3 μm. Although this region has spectral interference from ethylene and methane for the region 210 shown in the figure, and possible interference from the water vapor, in one embodiment, the process selects a narrow spectral region 220 near the wavenumber of 3040 cm$^{-1}$, to avoid methane interference and minimize ethylene and water vapor interference. For example, as shown in Figure 2, region 220 constitutes a good range for the benzene and ethylene detection, as the interference with the methane is not present in this region. In one application, this region may be between 3039.5 and 3040.5 cm$^{-1}$. Other values for the range 220 may be selected as long the wavenumber 230, corresponding to the methane peak 232, is not inside the range. The laser may be tuned in the range 222, between 3038 and 3039 cm$^{-1}$, for detecting the methane, and in the range 224, between 3036.5 and 3037.5 cm$^{-1}$, for detecting the water vapor.

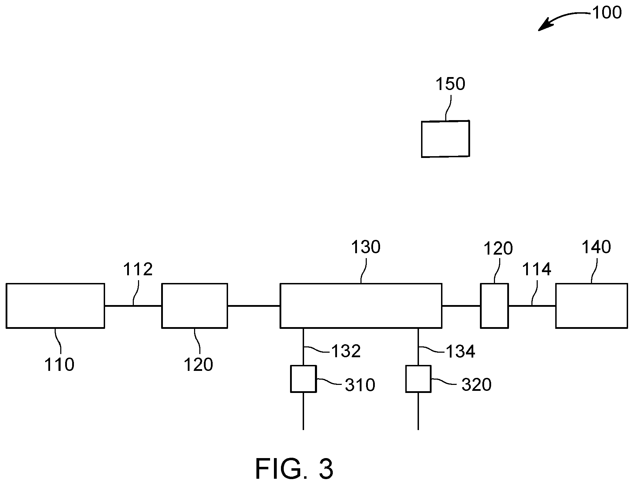

To minimize the interference of the absorbance signal due to the water, as illustrated in Figure 3, a dehumidifier 310 is attached at an inlet port 132 of the measurement chamber 130, so that the humidity from the air supplied to the measurement chamber 130 is minimized. In this way, it is expected that almost no water vapor to be found inside the measurement chamber 130. In addition, it is possible to add a pump 320 to an outlet port 134 of the measurement chamber 130, to force a movement of the air through the chamber. In one application, pump 320 may be a vacuum pump for the reasons discussed later. Pump 320 may also be connected to the inlet port 132. Any type of dehumidifier may be used for the system 100.

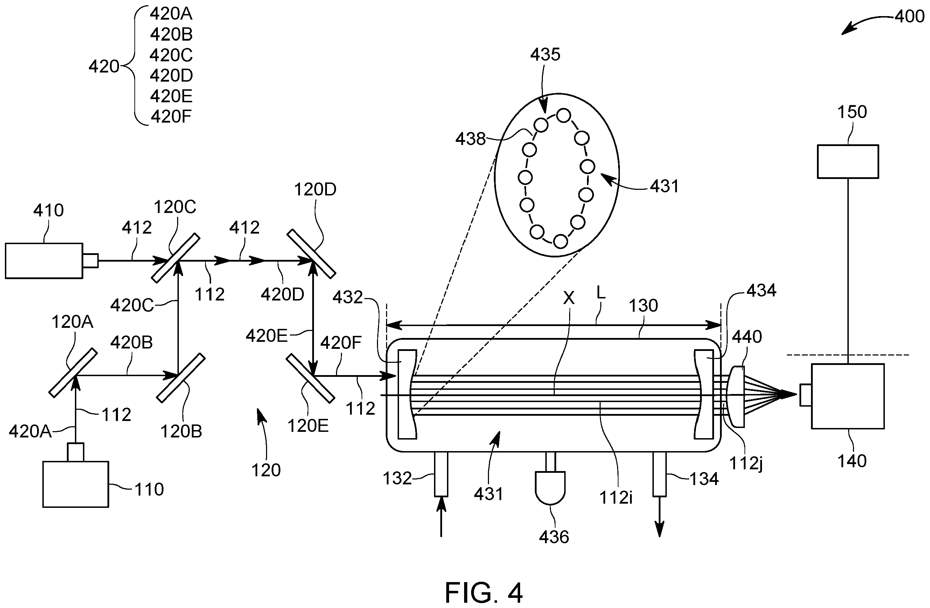

A possible implementation of the laser-based detection system is now discussed with regard to Figure 4. The system 400 includes the laser device 110 and the measurement chamber 130 shown in the embodiment of Figure 1. The laser device 110 is an interband cascade laser in this embodiment. An interband cascade laser is a device that produces coherent radiation over a large part of the mid-infrared region of the electromagnetic spectrum. The term "mid-infrared region" is understood herein to refer to a 3-8 μm wavelength band. For example, a DFB interband cascade laser (DFB-ICL, Nanoplus, Germany) emits near 3.3 μm with an output power of about 1-2 mW. However, any other laser or other light source that can emit a light beam with this wavelength may be used.

The embodiment shown in Figure 4 directs the emitted laser beam 112, with plural mirrors 120A to 120E, to the measurement chamber 130. The plural mirrors 120A to 120E are part of the optical components 120. This embodiment shows the use of 5 such mirrors. However, fewer or more mirrors may be used. These mirrors are used to integrate an additional laser beam 412 from an additional laser device 410, called herein an alignment laser device. While the mirrors 120A, 120B, 120D and 120E are fixed mirrors, mirror 120C is a flip mirror. This is so for the following reasons.

Before the laser beam 110 is used to detect the benzene and/or other substances (e.g., ethylene, methane, water vapor), the various components of the laser-based detection system 400 need to be optically aligned. Note that the laser-based detection system 400 also includes mirrors 432 and 434 located inside a cavity 431 formed inside the measurement chamber 130, a convergent lens 440, and the photosensor 140. As the main laser device 110's beam is not visible (being in the infrared range), the alignment laser device 410 is selected to emit a visible laser beam that can be used for alignment purposes. Thus, the laser beam 412 from the alignment laser device 410 needs to be coupled, only for alignment purposes, to the other optical components of the laser-based detection system 400. This is achieved with the flip mirror 120C. For a given orientation, as shown in Figure 4, the flip mirror 120C allows the main laser beam 112 to follow the optical path 420 (which includes path segments 420A to 420F) shown in the figure and prevents the alignment laser beam 412 to enter the system. However, for a different orientation (not shown) of the flip mirror 120C, the alignment laser beam 412 is coupled to the other optical elements. When this happens, the operator of the system may arrange each mirror and each other optical component to obtain the desired alignment. After this operation, the flip mirror 120C is flipped back to prevent the laser beam 412 from entering the system and allowing only the main laser beam 112 to follow the optical path 420 shown in Figure 4. Thus, the alignment laser device 410 is not necessary and not in use after the initial alignment of the optical components.

After the laser beam 112 leaves the last mirror 120E, it enters inside the measurement chamber 130. The measurement chamber 130 includes two mirrors 432 and 434, located in the cavity 431, which are designed to reflect multiple times the incoming laser beam 112. In one application, two ZnSe mirrors of 99.97% nominal reflectivity (LohnStar Optics) were used to form a cavity in a sampling cell having a length L (e.g., 50 cm). The length of the cavity can be modified. The laser beam 112 is aligned in an off-axis mode (i.e., not entering along a symmetry longitudinal axis X of the measurement cavity), which suppressed the spurious coupling noise significantly compared to the on-axis cavity. A reflection pattern 435 of the incoming laser beam 112 is illustrated in Figure 4. Figure 4 shows that the various points of reflections of the laser beam are disposed on an elliptical path 438. Note that the figure shows the multiple reflections $112_i$ of the incoming laser beam, between the two mirrors 432 and 434.

At each reflection on the mirror 434, part of the light $112_i$ passes the mirror and exits from the measurement chamber 130 as output laser beams $112_j$. These output laser beams $112_j$ are then collected via a focusing lens 440 (e.g., a convergent lens) on the photosensor 140. In one application, the photosensor 140 is a photodetector, for example, a 1.5 MHz AC-coupled, TE-cooled photodetector (Vigo Systems). The data collected at the photosensor 140 is then transmitted to data acquisition system 150 for processing.

Figure 4 shows that the measurement chamber 130 has an inlet port 132 and an outlet port 134 that fluidly communicate with the cavity 431. A pressure sensor 436 may be connected to the cavity 431 of the chamber 130 for measuring the pressure inside. The inlet and outlet ports are used to circulate ambient air through the measurement chamber 130 for refreshing the air inside the cavity. In this way, a measurement of the benzene and/or other substances inside the measurement chamber 130 reflects the presence and amount of the benzene and/or other substances in the ambient air.

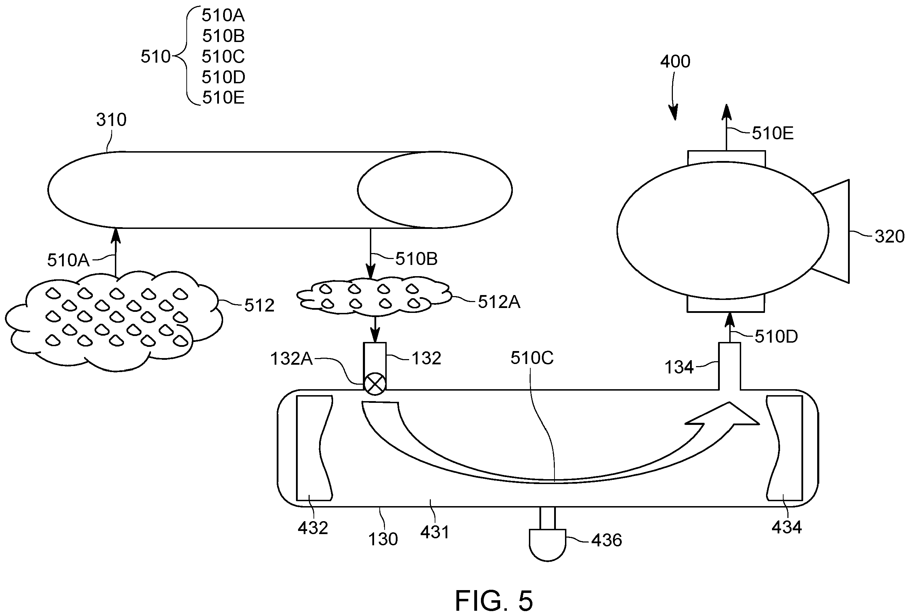

As previously discussed, for the selected wavelength of 3.3 $\mu$m, the air that enters inside the measurement chamber 130 is assumed to be very low in humidity or otherwise the absorbance of water may interfere with the benzene and/or other elements absorbance. Thus, if the ambient air is high in humidity, a dehumidifier 310 may be added to the laser-based detection system 400, as shown in Figure 5. Note that the dehumidifier 310 is optional. In one application, if the dehumidifier is not present and the humidity is high, an algorithm for detecting the benzene and/or other substances may be modified so that the water vapor is determined by multi-dimensional linear regression. The sharp water feature shown in Figure 2 between 3036.5 and 3037.5 cm$^{-1}$ enable the algorithm to separate the water absorption from other species. However, if the dehumidifier is present, then the dehumidifier 310 is fluidly connected to the inlet port 132 of the measurement chamber 130. Figure 5 shows the air path 510 (which includes segments 510A to 510E) followed by the ambient air 512 through the system. Note that the ambient air 512 is considered in this embodiment to be humid.

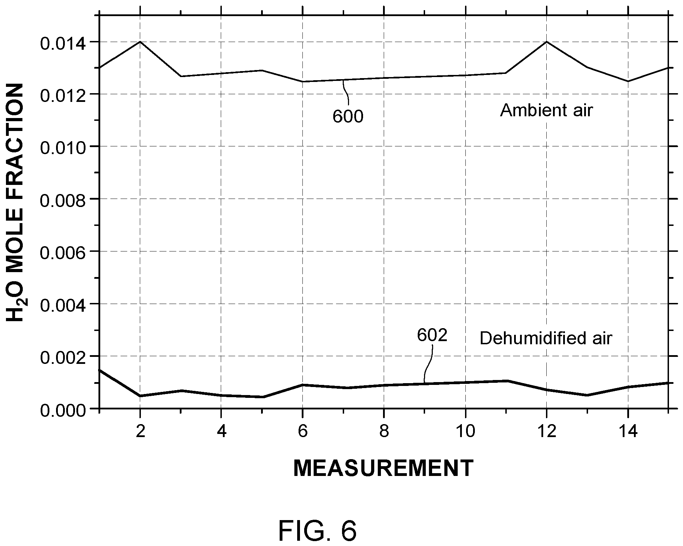

The dehumidifier 310 may be any known dehumidifier. In one application, a $CaSo_4$ dehumidifier has been used to remove the humidity from the incoming ambient air 512. Figure 6 shows a curve 600 that describes the humidity of the ambient air 512 and also a curve 602 that describes the humidity of the dehumidified air 512A, as introduced at the air inlet port 132 of the measurement chamber 130. Note that the dehumidified air 512A is very low in terms of water content (Figure 6 shows an almost zero mole fraction of water in air) while the amount of benzene in the dehumidified air is not affected by this process.

To force the incoming ambient air 512 to enter the dehumidifier 310 (if present) and the cavity 431 of the measurement chamber 130, a pump 320 may be used. The pump 320 may be connected to the outlet port 134 of the measurement chamber 130 so that the dehumidified air 512A, follows the path 510C and 510D to the pump 320 and then 510E out of the pump. In one embodiment, the pump 320 is a vacuum pump, which is configured to reduce the pressure inside the cavity 431. This is desired when the signal measured by the photosensor 140 needs to be calibrated.

More specifically, in one application, a valve 132A may be placed on the inlet port 132. This valve is closed so that no air is entering the measurement chamber 130. Then, the vacuum pump 320 is activated, for example, by the data acquisition system 150. The vacuum pump 320 may be run until the pressure inside the cavity 431, as measured by the pressure sensor 436, is below a certain threshold. When the pressure is below this threshold, it is considered that the cavity 431 has been emptied. Then, the laser device 110 is activated and a signal is measured with the photosensor 140. This signal constitutes the background signal, which needs to be compared to the actual signal measured with air in the cavity 431 at atmospheric pressure.

Once the evacuation is performed, the valve 132A is opened, which forces the air 512 through the dehumidifier 310 (if present) and into the cavity 431, so that a measurement of the benzene and/or other substances presence in the ambient air 512 can be performed. Note that after the initial evacuation of the system by using the vacuum pump 320, it is possible to either replace the vacuum pump with a compressor, or to use the vacuum pump not at full capacity, but only to reduce the pressure inside the cavity, to force the ambient air into the cavity due to a differential pressure. Alternatively, it is possible to remove the vacuum pump and use a compressor for circulating the ambient air through the cavity. The compressor 320 may also be connected to the air inlet port 132, or to the inlet of the dehumidifier 310 when only used to circulate the air through the measurement chamber.

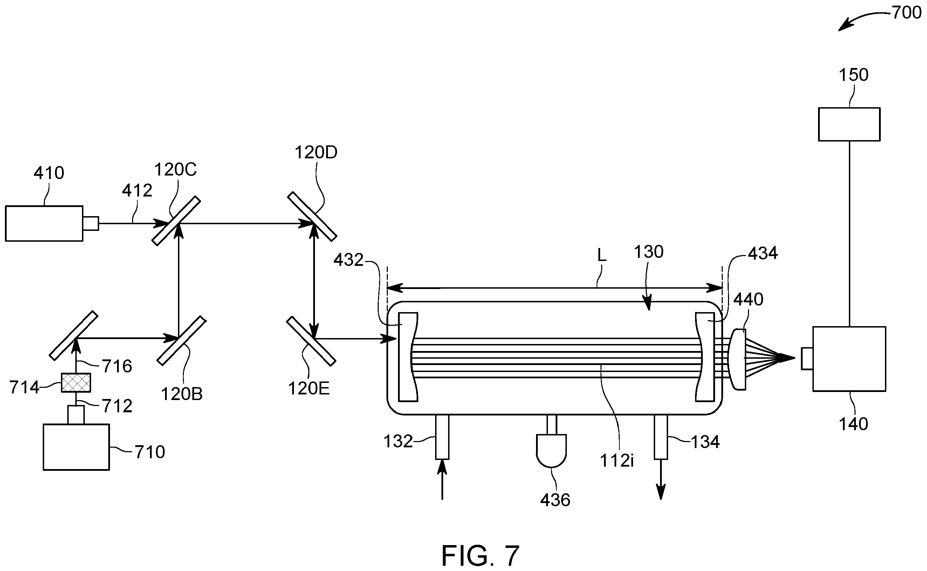

In another embodiment illustrated in Figure 7, a laser-based detection system 700 includes many of the elements of the system 400, which are identified with the reference numbers of Figure 4. However, the laser device 710 is different from the laser device 110 in the sense that the laser device 710 does not directly emit a laser beam 712 that has a wavelength of about 3.3 $\mu$m. In fact, contrary to the laser device 110, the laser device 710 cannot generate a laser beam having a wavelength of about 3.3 $\mu$m. However, as previously discussed, the goal is to have such a wavelength for measuring the presence of benzene and/or other substances. Thus, a non-linear optical element 714 is placed to interact with the initial laser beam 712 and change its wavelength to include a 3.3 $\mu$m wavelength. Such a non-linear optical element may be an optical grating or similar device. While the initial laser beam 712 does not include the 3.3 $\mu$m wavelength, the processed laser beam 716 would include the 3.3 $\mu$m wavelength.

The reflectivity of the mirrors 432 and 434 in the cavity 431 affect the sensitivity of the absorbance measurements performed with the laser beam inside the measurement chamber 130. Although a manufacturer provides the nominal mirror reflectivity of the sold mirrors, the inventors have noted that these manufacturer provided values are not always accurate. As these values impact the selection of various measurement parameters, it is desired to know the actual reflectivity of these mirrors. For this reason, experiments were performed by the inventors, with known amounts of benzene near 3037 cm$^{-1}$ in the system 400, and the measured CEAS absorbance spectrum was compared with the single-pass simulated absorbance. The mirror reflectivity was calculated using the formula: $R = \frac{e^{A_{CEAS}} - 1}{e^{A_{CEAS}} - e^{-A_{SP}}}$ and the actual reflectivity was found to be R = 99.964 + 0.007%, which increases the path-length by more than three orders of magnitude.

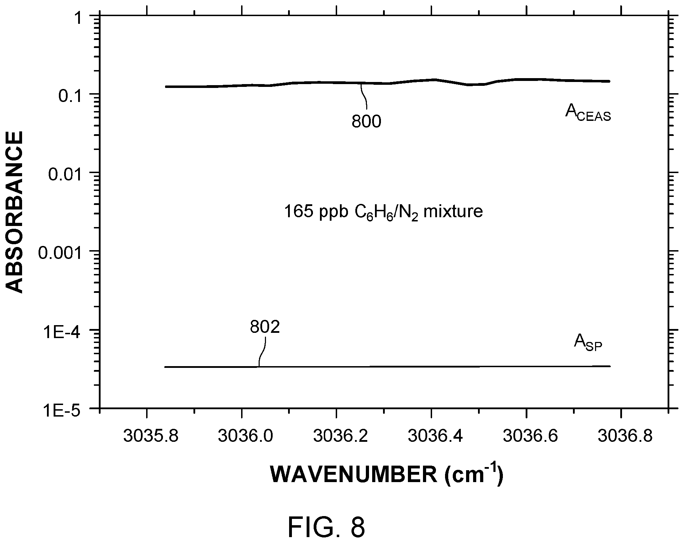

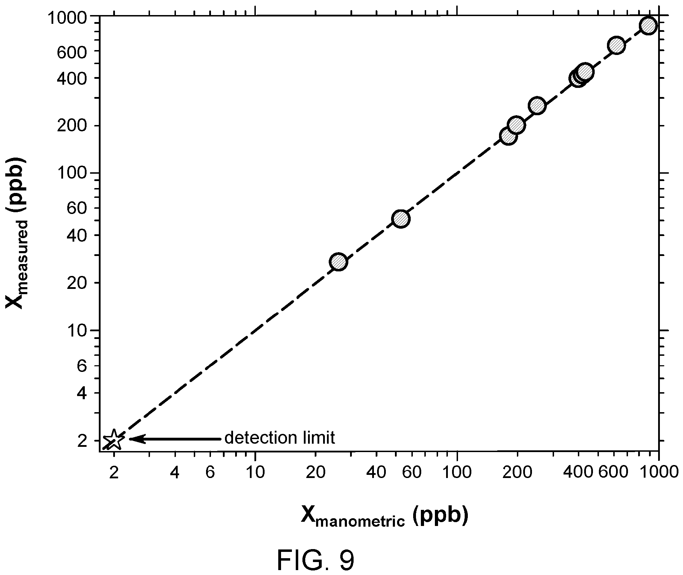

Then, measurements were performed with mixtures of benzene and nitrogen with the system 100. Figure 8 shows that the absorption signal 800 for a 165 ppb $C_6H_6/N_2$ mixture is significantly increased for the CEAS based determination that uses the system 100 when compared to the simulated single-pass absorbance 802. A number of different $C_6H_6/N_2$ mixtures were prepared with mole fractions ranging from 8 ppb to 2.43 ppm to test the system 100's performance. The resulting data is shown in Figure 9. In Figure 9, the measured benzene mole fraction is shown on the vertical axis and is plotted versus the benzene mole fraction calculated manometrically, which is shown on the horizontal axis. The single-pass minimum detection limit of benzene is known to be about 200 ppm. However, the novel system 100 was able to decrease this limit (shown by a star in the figure) to 2 ppb, which means an improvement by a factor of about 50,000, which is a significant improvement.

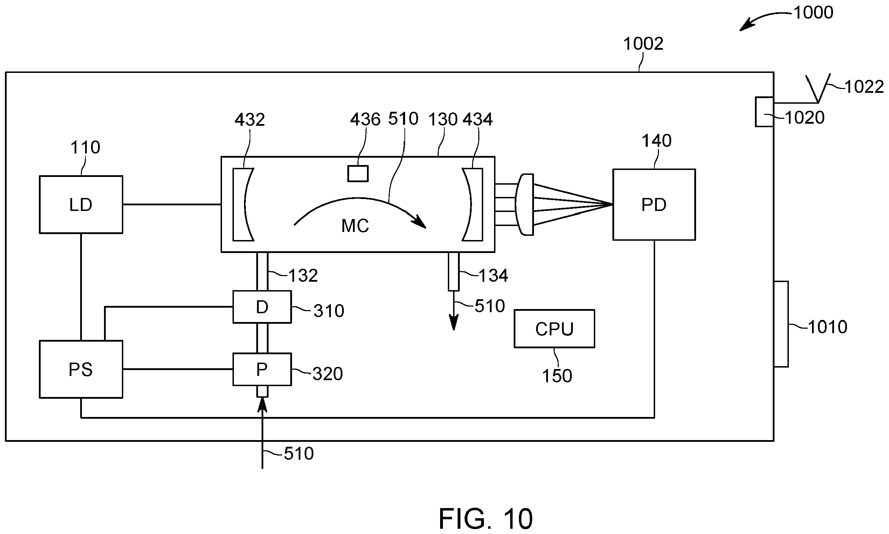

This experiment shows that the laser-based detection system discussed herein has a very high sensitivity for detecting the benzene in ambient air, which is unmatched by any known device. This system may be packaged to be portable as now discussed with regard to Figure 10. The laser-based detection system 1000 includes a housing 1002 in which the laser device 110, the measurement chamber 130, and the photosensor 140 are located. The optical components 120 may be omitted in this embodiment. In one application, the optical components 120 and the alignment laser 410 may be provided on another platform that may be optically connected to the laser-based detection system 1000, when necessary.

The laser-based detection system 1000 includes, optionally, a dehumidifier 310 connected to the inlet port 132 of the measurement chamber 130, and a pump 320 located anywhere along the air path 510. For simplicity, the pump 320 is located in Figure 10 upstream from the dehumidifier. However, as previously discussed, the pump may be connected to the outlet port 134. In one application, the pump may be a vacuum pump.

The laser-based detection system 1000 further includes a data acquisition system 150 that is configured to control each of the components of the system. The components of the system may be supplied with power from a power source PS. The power source may be a portable source, e.g., battery, fuel cell, etc., or a fixed wired source, i.e., the laser-based detection system 1000 is plugged to a conventional power source, e.g., a generator.

In one application, the laser-based detection system 1000 may also include a monitor 1010 that is attached to the housing 1002. The monitor 1010 can be configured to display an indication about the benzene concertation, based on the analysis provided by the data acquisition system 150. For example, the monitor 1010 may display a graph showing the concentration of the benzene in the ambient air for a given measurement location. In another application, the laser-based detection system 1000 may have a transceiver 1020 equipped with an antenna 1022 for transmitting a signal indicative of the presence of the benzene to a server or to a user. For example, if the laser-based detection system 1000 is used in a petrochemical facility, the system 1000 may be configured to transmit in a wireless manner an alarm to a command center of the facility, when a level of detected benzene is above a given threshold.

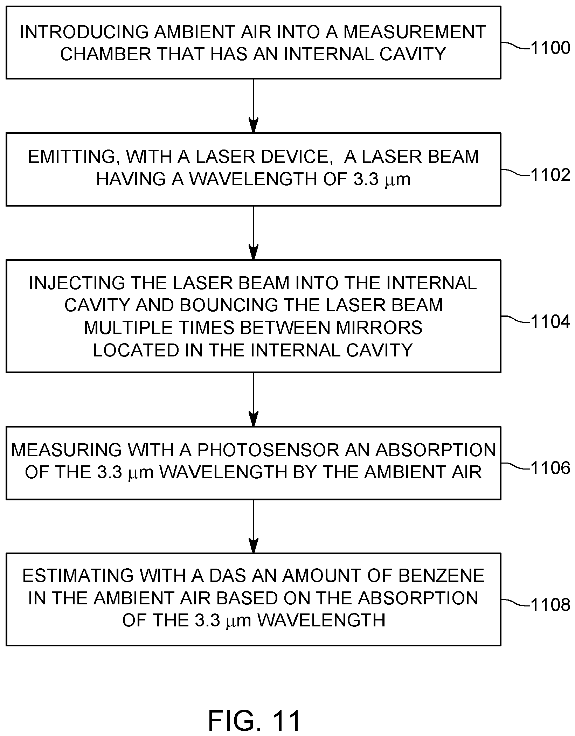

A method of measuring the level of benzene is now discussed with regard to Figure 11. The method includes a step 1100 of introducing ambient air 512 into a measurement chamber 130 that has an internal cavity 431, a step 1102 of emitting, with a laser device 110, a laser beam 112 having a wavelength of 3.3 $\mu$m, a step 1104 of injecting the laser beam 112 into the internal cavity 431, and bouncing the laser beam 112 multiple times between mirrors 432, 434 located in the internal cavity 431, a step 1106 of measuring with a photosensor 140 an absorption of the 3.3 $\mu$m wavelength by the ambient air 512, and a step 1108 of estimating, with a data acquisition system 150, an amount of benzene in the ambient air based on the absorption of the 3.3 $\mu$m wavelength.

The method may also include a step of pumping with a pump the ambient air into the measuring chamber, and/or a step of focusing with a convergent lens an output laser beam from the measuring chamber, onto the photosensor, and/or a step of aligning the laser beam with the measuring chamber by using an additional laser beam that emits a visible laser beam, and/or a step of evacuating the measuring chamber by creating vacuum in the internal cavity and measuring the absorption in vacuum.

The system discussed above can be used to measure other substances or benzene mixed with other substances. For example, in one embodiment, the system was used to simultaneously measure benzene and ethylene. Ethylene was added to benzene in nitrogen so that the total absorbance is measured. Multi-dimensional linear regression is applied to the total absorbance in order to calculate the concentration of each species separately. Table 1 shows a comparison between the manometric and measured concentrations of nine different mixtures of benzene and ethylene.

The large error in the ethylene measurements is due to the weak absorption spectrum compared to benzene. High accuracy for benzene detection was maintained even in the presence of ethylene.

Table 1

| Mixture | Benzene (ppb) | | | Ethylene (ppb) | | |
|---|---|---|---|---|---|---|
| | $X_{manometric}$ | $X_{measured}$ | %Error | $X_{manometric}$ | $X_{measured}$ | %Error |
| 1 | 39 | 36 | 7.7 | 120 | 100 | 16.7 |
| 2 | 122 | 132 | 7.6 | 169 | 147 | 13 |
| 3 | 213 | 219 | 2.7 | 178 | 142 | 20.2 |
| 4 | 308 | 288 | 6.5 | 387 | 396 | 227 |
| 5 | 441 | 439 | 0.45 | 1318 | 727 | 44.8 |
| 6 | 700 | 702 | 0.28 | 715 | 507 | 29.1 |
| 7 | 1169 | 1152 | 1.45 | 848 | 908 | 6.6 |
| 8 | 1235 | 1176 | 4.78 | 984 | 1101 | 10.6 |
| 9 | 2433 | 2579 | 5.66 | 1343 | 2764 | 51.4 |

In another embodiment, the same system was used to simultaneously measure benzene and methane. Methane was added to benzene in nitrogen so that the total absorbance is measured. Multi-dimensional linear regression is again applied to the total absorbance in order to calculate the concentration of each species separately. Table 2 shows a comparison between the manometric and measured concentrations of four different benzene and methane mixtures. The low error in the methane measurements is due to the strong and well-resolved absorption spectrum compared to benzene. Note that high-accuracy for the benzene detection was maintained even in the presence of methane.

Table 2

| Mixture | Benzene (ppb) | | | Methane (ppb) | | |
|---|---|---|---|---|---|---|
| | $X_{manometric}$ | $X_{measured}$ | %Error | $X_{manometric}$ | $X_{measured}$ | %Error |
| 1 | 329 | 315 | 426 | 698 | 694 | 0.57 |
| 2 | 340 | 351 | 3.13 | 426 | 423 | 0.7 |
| 3 | 396 | 362 | 8.59 | 318 | 341 | 6.74 |
| 4 | 495 | 512 | 3.32 | 782 | 789 | 0.89 |

In still another embodiment, the system discussed above has been used to simultaneously measure the benzene and water vapor. Water vapor was added to benzene in nitrogen so that the total absorbance is measured. Multi-dimensional linear regression is again applied to the total absorbance in order to calculate the concentration of each species separately. Table 3 shows a comparison between the manometric and measured concentrations of 12 different benzene and water vapor mixtures. It can be seen that the benzene is measured with high-accuracy even in the presence of the water vapor. Note that the previously employed low-pass filter cannot be used anymore in data processing as it will smoothen the water vapor feature, so another filter of higher cutoff frequency is used instead. This increases the minimum detection limit of benzene to 2 ppb.

Table 3

| Mixture | Benzene (ppb) | | | Water (%) | | |
|---|---|---|---|---|---|---|
| | $X_{manometric}$ | $X_{measured}$ | %Error | $X_{manometric}$ | $X_{measured}$ | %Error |
| 1 | 138 | 151 | 8.6 | 0.64 | 0.65 | 1.5 |
| 2 | 216 | 227 | 4.8 | 1 | 1.003 | 0.3 |
| 3 | 277 | 251 | 9.4 | 0.876 | 0.863 | 1.5 |

(continued)

| Mixture | Benzene (ppb) | | | Water (%) | | |
|---|---|---|---|---|---|---|
| | $X_{manometric}$ | $X_{measured}$ | %Error | $X_{manometric}$ | $X_{measured}$ | %Error |
| 4 | 331 | 357 | 7.3 | 0.53 | 0.59 | 10.2 |
| 5 | 350 | 357 | 1.96 | 0.36 | 0.49 | 26.5 |
| 6 | 368 | 398 | 7.5 | 0.76 | 0.79 | 3.8 |
| 7 | 423 | 433 | 2.3 | 0.68 | 0.67 | 1.5 |
| 8 | 498 | 543 | 8.3 | 0.54 | 0.41 | 24.1 |
| 9 | 544 | 527 | 3.1 | 0.44 | 0.47 | 6.4 |
| 10 | 600 | 613 | 2.1 | 0.64 | 0.59 | 7.8 |
| 11 | 717 | 739 | 2.98 | 0.49 | 0.51 | 3.9 |
| 12 | 744 | 735 | 1.2 | 0.28 | 0.3 | 6.7 |

In yet another experiment, air samples were collected from inside the lab, outside the building, a parking garage, and a gas station. All of the aforementioned species were measured in these samples and the results are shown in Table 4.

Table 4

| Sample | $X_{Benzene}$(ppb) | $X_{Ethylene}$(ppb) | $X_{Methane}$(ppb) | $X_{Water}$(%) |
|---|---|---|---|---|
| Laboratory Air | 59 | 806 | 1189 | 1.7 |
| | 60 | 1252 | 724 | 1.35 |
| | 79 | 534 | 712 | 1.3 |
| | 136 | 1059 | 1136 | 1.42 |
| Ambient Air | 78 | 534 | 712 | 1.3 |
| | 107 | 355 | 684 | 0.86 |
| Parking Garage - Weekday | 425 | 882 | 597 | 0.81 |
| Parking Garage - Weekend | 150 | 350 | 697 | 1 |
| Gas Station | 1217 | 1872 | 991 | 1.1 |

The high concentrations of ethylene and methane in the laboratory are due to the presence of gas cylinders of these species that might leak some amounts into the air. It is also noticeable that the amount of benzene decreases significantly in the parking garage from a weekday to a weekend due to the reduced usage of this garage by cars on weekends.

Benzene was measured with a Gas Chromatograph (GC) in some of the aforementioned samples for varication. Table 5 shows good agreement between the measurements performed with the system 400 and the GC.

Table 5

| $X_{C6H6}$ (ppb) | |
|---|---|
| Laser sensor | GC |
| 425 ± 24 | 434 ± 79 |
| 150 ± 18 | 132 ± 44 |
| 128 ± 12 | 114 ± 52 |
| 152 ± 32 | 157 ± 5 |
| 1217 | 1284 |

The disclosed embodiments provide a novel configuration for a laser-based detection system that is capable to determine a lower level of benzene in air than the existing sensors, down to 2 ppb in the presence of interfering species. The embodiments are intended to cover alternatives, modifications and equivalents, which are included in the spirit and scope of the invention as defined by the appended claims. Further, in the detailed description of the embodiments, numerous specific details are set forth in order to provide a comprehensive understanding of the claimed invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## REFERENCES

[1] Lewicki, Rafał, et al. "Spectroscopic benzene detection using a broadband monolithic DFB-QCL array." Novel In-Plane Semiconductor Lasers XV. Vol. 9767. International Society for Optics and Photonics, 2016

## Claims

1. A laser-based detection system (100) comprising:

   a laser device (110) configured to emit a laser beam (112) with a wavelength in a range of 2.5 to 4.0 $\mu$m or in a range of 3.0 to 4.5 $\mu$m;
   a measuring chamber (130) configured to receive in an internal cavity (431) ambient air (512) and the laser beam (112), wherein the measuring chamber (130) is configured to bounce the laser beam (112) inside the internal cavity (431) multiple times;
   a photosensor (140) configured to receive an output laser beam from the measuring chamber (130),
   **characterized in that** the photosensor (140) is further configured to measure an absorption of the 3.3 $\mu$m wavelength by the ambient air (512) in the internal cavity (431); and **in that** the system comprises
   a data acquisition system (150) configured to receive measurements from the photosensor and determine a presence of benzene in the ambient air based on the absorption of the 3.3 $\mu$m wavelength.

2. The system of Claim 1, wherein the laser device is an interband cascade laser.

3. The system of Claim 1, further comprising:
   a dehumidifier connected to an inlet port of the measuring chamber to remove water from the ambient air prior to entering the internal cavity.

4. The system of Claim 1, wherein the internal cavity includes two mirrors that reflect the laser beam multiple times inside the cavity.

5. The system of Claim 4, wherein a cross-section of the internal cavity is elliptical.

6. The system of Claim 1, further comprising:
   a convergent lens located between the measuring chamber and the photodetector for focusing the output laser beam from the measuring chamber.

7. The system of Claim 6, further comprising:
   a pump connected to an inlet port or an outlet port of the measuring chamber for circulating the ambient air through the internal cavity.

8. The system of Claim 7, wherein the pump is a vacuum pump that evacuates the internal cavity.

**9.** The system of Claim 1, further comprising:

optical components located between the laser source and the measuring chamber for directing the laser beam from the laser source to the internal cavity; and

an alignment laser that is optically connected to the optical components and is configured to align a laser beam from the alignment laser with the measuring chamber in an off-axis arrangement.

**10.** A method for determining a presence of benzene and/or other substances in ambient air, the method comprising:

introducing (1100) ambient air (512) into a measurement chamber (130) that has an internal cavity (431);

emitting (1102) with a laser source (110) a laser beam (112) with a wavelength in a range of 2.5 to 4.0 $\mu$m or in a range of 3.0 to 4.5 $\mu$m;

directing (1104) the laser beam (112) into the internal cavity (431) and bouncing the laser beam (112) multiple times between mirrors (432, 434) located in the internal cavity (431), the method **characterized by**

measuring (1106) with a photosensor (140) an absorption of the 3.3 $\mu$m wavelength by the ambient air (512); and

estimating (1108) with a data acquisition system (150) an amount of benzene in the ambient air based on the absorption of the 3.3 $\mu$m wavelength.

**Patentansprüche**

**1.** Laserbasiertes Detektionssystem (100), umfassend:

eine Laservorrichtung (110), die konfiguriert ist, um einen Laserstrahl (112) mit einer Wellenlänge in einem Bereich von 2,5 bis 4,0 $\mu$m oder in einem Bereich von 3,0 bis 4,5 $\mu$m zu emittieren;

eine Messkammer (130), die konfiguriert ist, um in einem inneren Hohlraum (431) Umgebungsluft (512) und den Laserstrahl (112) aufzunehmen, wobei die Messkammer (130) konfiguriert ist, um den Laserstrahl (112) innerhalb des inneren Hohlraums (431) mehrfach aufprallen zu lassen;

einen Fotosensor (140), der konfiguriert ist, um einen Ausgangslaserstrahl von der Messkammer (130) zu empfangen,

**dadurch gekennzeichnet, dass** der Fotosensor (140) ferner konfiguriert ist, um eine Absorption der Wellenlänge 3,3 $\mu$m durch die Umgebungsluft (512) in dem inneren Hohlraum (431) zu messen; und dass das System ein Datenerfassungssystem (150) umfasst, das konfiguriert ist, um Messungen von dem Fotosensor zu empfangen und basierend auf der Absorption der Wellenlänge 3,3 $\mu$m ein Vorhandensein von Benzol in der Umgebungsluft zu bestimmen.

**2.** System nach Anspruch 1, wobei die Laservorrichtung ein Zwischenband-Kaskadenlaser ist.

**3.** System nach Anspruch 1, ferner umfassend:
einen Entfeuchter, der mit einem Einlassanschluss der Messkammer verbunden ist, um Wasser aus der Umgebungsluft zu entfernen, bevor es in den inneren Hohlraum gelangt.

**4.** System nach Anspruch 1, wobei der innere Hohlraum zwei Spiegel beinhaltet, die den Laserstrahl mehrfach innerhalb des Hohlraums reflektieren.

**5.** System nach Anspruch 4, wobei ein Querschnitt des inneren Hohlraums elliptisch ist.

**6.** System nach Anspruch 1, ferner umfassend:
eine Konvergenzlinse zwischen der Messkammer und dem Fotodetektor zum Fokussieren des Ausgangslaserstrahls aus der Messkammer.

**7.** System nach Anspruch 6, ferner umfassend:
eine Pumpe, die mit einem Einlassanschluss oder einem Auslassanschluss der Messkammer verbunden ist, um die Umgebungsluft durch den inneren Hohlraum zirkulieren zu lassen.

**8.** System nach Anspruch 7, wobei die Pumpe eine Vakuumpumpe ist, die den inneren Hohlraum evakuiert.

**9.** System nach Anspruch 1, ferner umfassend:

optische Komponenten, die sich zwischen der Laserquelle und der Messkammer befinden, um den Laserstrahl von der Laserquelle auf den inneren Hohlraum zu richten; und

einen Ausrichtungslaser, der optisch mit den optischen Komponenten verbunden und konfiguriert ist, um einen Laserstrahl von dem Ausrichtungslaser in einer achsversetzten Anordnung mit der Messkammer auszurichten.

10. Verfahren zur Bestimmen eines Vorhandenseins von Benzol und/oder anderen Substanzen in Umgebungsluft, das Verfahren umfassend:

Einleiten (1100) von Umgebungsluft (512) in eine Messkammer (130), die einen inneren Hohlraum (431) aufweist;

Emittieren (1102), mit einer Laserquelle (110), eines Laserstrahls (112) mit einer Wellenlänge in einem Bereich von 2,5 bis 4,0 $\mu$m oder in einem Bereich von 3,0 bis 4,5 $\mu$m;

Richten (1104) des Laserstrahls (112) in den inneren Hohlraum (431) und mehrfaches Aufprallenlassen des Laserstrahls (112) zwischen Spiegeln (432, 434), die sich in dem inneren Hohlraum (431) befinden, wobei das Verfahren durch Folgendes gekennzeichnet ist

Messen (1106), mit einem Fotosensor (140), einer Absorption der Wellenlänge 3,3 $\mu$m durch die Umgebungsluft (512); und

Schätzen (1108), mit einem Datenerfassungssystem (150), einer Benzolmenge in der Umgebungsluft basierend auf der Absorption der Wellenlänge 3,3 $\mu$m.

**Revendications**

1. Système de détection laser (100) comprenant :

un dispositif laser (110) configuré pour émettre un faisceau laser (112) avec une longueur d'onde dans une plage de 2,5 à 4,0 $\mu$m ou dans une plage de 3,0 à 4,5 $\mu$m ;
une chambre de mesure (130) configurée pour recevoir dans une cavité interne (431) de l'air ambiant (512) et le faisceau laser (112), dans lequel la chambre de mesure (130) est configurée pour faire rebondir le faisceau laser (112) à l'intérieur de la cavité interne (431) à de multiples reprises ;
un photodétecteur (140) configuré pour recevoir un faisceau laser de sortie provenant de la chambre de mesure (130),
**caractérisé en ce que** le photodétecteur (140) est en outre configuré pour mesurer une absorption de la longueur d'onde de 3,3 $\mu$m par l'air ambiant (512) dans la cavité interne (431) ; et **en ce que** le système comprend un système d'acquisition de données (150) configuré pour recevoir des mesures du photodétecteur et déterminer une présence de benzène dans l'air ambiant sur la base de l'absorption de la longueur d'onde de 3,3 $\mu$m.

2. Système selon la revendication 1, dans lequel le dispositif laser est un laser en cascade interbande.

3. Système selon la revendication 1, comprenant en outre :
un déshumidificateur relié à un orifice d'entrée de la chambre de mesure pour éliminer l'eau de l'air ambiant avant qu'il ne pénètre dans la cavité interne.

4. Système selon la revendication 1, dans lequel la cavité interne inclut deux miroirs qui réfléchissent le faisceau laser à de multiples reprises à l'intérieur de la cavité.

5. Système selon la revendication 4, dans lequel une section transversale de la cavité interne est elliptique.

6. Système selon la revendication 1, comprenant en outre :
une lentille convergente située entre la chambre de mesure et le photodétecteur pour la mise au point du faisceau laser de sortie provenant de la chambre de mesure.

7. Système selon la revendication 6, comprenant en outre :
une pompe reliée à un orifice d'entrée ou un orifice de sortie de la chambre de mesure pour faire circuler l'air ambiant à travers la cavité interne.

8. Système selon la revendication 7, dans lequel la pompe est une pompe à vide qui évacue la cavité interne.

9. Système selon la revendication 1, comprenant en outre :

des composants optiques situés entre la source laser et la chambre de mesure pour diriger le faisceau laser de la source laser vers la cavité interne ; et
un laser d'alignement qui est connecté optiquement aux composants optiques et est configuré pour aligner un faisceau laser provenant du laser d'alignement avec la chambre de mesure dans un agencement désaxé.

10. Procédé de détermination d'une présence de benzène et/ou d'autres substances dans l'air ambiant, le procédé comprenant :

l'introduction (1100) d'air ambiant (512) dans une chambre de mesure (130) qui a une cavité interne (431) ;
l'émission (1102) avec une source laser (110) d'un faisceau laser (112) avec une longueur d'onde dans une plage de 2,5 à 4,0 $\mu$m ou dans une plage de 3,0 à 4,5 $\mu$m ;
la direction (1104) du faisceau laser (112) dans la cavité interne (431) et le rebond du faisceau laser (112) à de multiples reprises entre les miroirs (432, 434) situés dans la cavité interne (431), le procédé étant **caractérisé par**
la mesure (1106) avec un photodétecteur (140) d'une absorption de la longueur d'onde de 3,3 $\mu$m par l'air ambiant (512) ; et
l'estimation (1108) avec un système d'acquisition de données (150) d'une quantité de benzène dans l'air ambiant sur la base de l'absorption de la longueur d'onde de 3,3 $\mu$m.

FIG. 1

FIG. 2

FIG. 3

FIG. 4

FIG. 5

EP 3 899 493 B1

FIG. 6

FIG. 7

EP 3 899 493 B1

FIG. 8

FIG. 9

FIG. 10

EP 3 899 493 B1

```
┌─────────────────────────────────────────────┐
│ INTRODUCING AMBIENT AIR INTO A MEASUREMENT   │
│ CHAMBER THAT HAS AN INTERNAL CAVITY          │──1100
└─────────────────────────────────────────────┘
                     │
                     ▼
┌─────────────────────────────────────────────┐
│ EMITTING, WITH A LASER DEVICE,  A LASER BEAM │
│ HAVING A WAVELENGTH OF 3.3 μm                │──1102
└─────────────────────────────────────────────┘
                     │
                     ▼
┌─────────────────────────────────────────────┐
│ INJECTING THE LASER BEAM INTO THE INTERNAL   │
│ CAVITY AND BOUNCING THE LASER BEAM           │
│ MULTIPLE TIMES BETWEEN MIRRORS               │──1104
│ LOCATED IN THE INTERNAL CAVITY               │
└─────────────────────────────────────────────┘
                     │
                     ▼
┌─────────────────────────────────────────────┐
│ MEASURING WITH A PHOTOSENSOR AN ABSORPTION   │
│ OF THE 3.3 μm WAVELENGTH BY THE AMBIENT AIR  │──1106
└─────────────────────────────────────────────┘
                     │
                     ▼
┌─────────────────────────────────────────────┐
│ ESTIMATING WITH A DAS AN AMOUNT OF BENZENE   │
│ IN THE AMBIENT AIR BASED ON THE ABSORPTION   │──1108
│ OF THE 3.3 μm WAVELENGTH                     │
└─────────────────────────────────────────────┘
```

FIG. 11

**REFERENCES CITED IN THE DESCRIPTION**

**Patent documents cited in the description**

- US 62781128
- US 62846003
- US 20070273882
- JP H09269292 B